Europäisches Patentamt

European Patent Office

Office européen des brevets

(11) Publication number:

**0 340 885**
**A2**

## (12) EUROPEAN PATENT APPLICATION

(21) Application number: 89301139.5

(22) Date of filing: 06.02.89

(51) Int. Cl.4: **A47B 47/00 , A47B 87/00**

A request for addition of figures 5 to 15 has been filed pursuant to Rule 88 EPC. A decision on the request will be taken during the proceedings before the Examining Division (Guidelines for Examination in the EPO, A-V, 2.2).

(30) Priority: 05.02.88 JP 26030/88
28.03.88 JP 74042/88

(43) Date of publication of application:
08.11.89 Bulletin 89/45

(84) Designated Contracting States:
DE FR GB IT SE

(71) Applicant: Yasumuro, Kohichi
14-5, Higashisanjo 2-chome
Sanjo-shi Niigata-ken(JP)

(72) Inventor: Yasumuro, Kohichi
14-5, Higashisanjo 2-chome
Sanjo-shi Niigata-ken(JP)

(74) Representative: van Berlyn, Ronald Gilbert
23, Centre Heights
London, NW3 6JG(GB)

(54) A top-plate structure of variable shapes and extents for furniture, and a furniture structure of variable heights using the top-plate structure.

(57) Herein disclosed is a furniture top-plate structure of variable shapes and extents. This top-plate structure is constructed by connecting a plurality of hollow, box modules, which have predetermined vertical and horizontal rigidities, removably but rigidly, while holding the side faces thereof in frictional engagement, to form one rigid structure. Also disclosed is a desk or table structure of variable shapes and heights. This desk or table structure is constructed by stacking a plurality of box modules one on another to form one of at least two leg structures and by placing the top-plate structure removably in position on the two leg structures.

# A TOP-PLATE STRUCTURE OF VARIABLE SHAPES AND EXTENTS FOR FURNITURE, AND A FURNITURE STRUCTURE OF VARIABLE HEIGHTS USING THE TOP-PLATE STRUCTURE

## BACKGROUND OF THE INVENTION

### Field of the Invention

The present invention relates to a top-plate structure for use with a variety of furniture such as a desk or table and, more particularly, to a top-plate structure of variable shapes and extents, which is constructed by holding at least two hollow, rectangular boxes (which will be shortly referred to as "box modules") in abutment against each other and connecting them removably but rigidly in a horizontal direction to form a rigid top-plate structure. The present invention also relates to a furniture structure of variable heights, which is constructed by stacking the box modules removably in a vertical direction to form two leg structures and by placing the top-plate structure removably on the leg structures.

### Description of the Prior Art

A top plate to be used with a desk or table has a variety of extents and shapes, depending upon its applications. For example, the desk is classified into a study desk for children, an office desk, a writing desk, a desk for word processors, and so on. On the other hand, the table is classified into a dining table, a working table, a corner table and so on. The top plate to be used with such various desks or tables naturally has a variety of shapes and extents.

A mechanism for varying the extent of the top plate is heretofore devised to retract a portion of the top plate for daily uses of less members and extend it for uses of more members. As disclosed in Japanese Utility Model Publication No. 26604/1981, there is another device in which the legs of a desk or table can be folded. Both the devices of the prior art have been intended merely to reduce the space for storing the top plate and the desk or table itself. Moreover, there has never been realized a top plate which allows a user to vary its shape freely for the intended application from the designed shape.

Whatever kind the desk (or table) might belongs to, on the other hand, it is important that the desk can match the body size and position of its user so that he can use it comfortably for a long time. The office desk, for example, supposes an adult as its user so that its top plate has a variety of sizes, but its height has several standards for individual applications intended so that it is fixed if one standard is selected. It is, therefore, the current practice that the adjustment of the desk height for the body size and position is accomplished by varying the difference between the desk height and the height of the seat such that a height-adjustable seat is used. Here, the height difference is suitably set at about 30 cm for the office desk and at about 23 cm for the study desk for an eight-year old child. On the other hand, the desk height is suitably ranged from about 47 cm for children to about 70 cm for adults, whereas the seat height is suitably ranged from about 26 cm for children to about 40 cm for adults.

The study desk becoming popular in recent years can vary the desk height itself mechanically as the child user grows. This mechanism is exemplified by adjusting the desk height stepwise with removable pins, or by moving the top plate continuously up and down by actuating screws, a rack-and-pinion mechanism or hydraulic cylinders in a simple operation of turning a handle. However, the frequency required for adjusting the desk height is not so high.

A unit desk capable of varying the height and extents of its top plate is disclosed in Japanese Utility Model Publication No. 43564/1982. In this disclosure, the height of the top plate can be varied by moving the support plate in a main box and the side plates of a desk leg up and down. The usable extent of the top plate can be varied by forming retaining holes in the lower face of one end of the top plate at a suitable pitch in the longitudinal direction and by retaining the desired one of the retaining holes on an engagement projection of the support plate to vary the forward extension of the top plate. In this unit desk, however, the variable ranges of the height and extent of the top plate are limited, and the desk shape itself cannot be varied.

## SUMMARY OF THE INVENTION

It is a major object to provide a top-plate structure for furniture, which can vary not only an extent but a shape.

Another object of the present invention is to provide a furniture top-plate structure which is enabled to vary its extent and shape in terms of its width and depth as a unit of a box module by connecting a plurality of hollow, box modules removably but rigidly in a horizontal direction.

Still another object of the present invention is to provide a furniture top-plate structure which can be converted into a chest of drawers, while requiring no space, by disconnecting the box modules from the top-plate structure by stacking them one on another.

Another but major object of the present invention is to provide a furniture structure which is enabled to vary its extent, height and shape by connecting and stacking a plurality of hollow, box modules relatively simply.

According to one feature of the present invention, there is provided a top-plate structure of variable shapes and extents for furniture, which comprises: a plurality of hollow, box modules having predetermined rigidities in vertical and horizontal directions; and rigidly connecting means for holding the side faces of said box modules in abutment against each other and connecting said box modules removably but rigidly to form one rigid structure.

According to another feature of the present invention, there is provided a furniture structure of variable shapes and heights, which comprises: a top-plate structure of variable shapes, including: a plurality of hollow, box modules having predetermined rigidities in vertical and horizontal directions; and rigidly connecting means for holding the side faces of said box modules in abutment against each other and connecting said box modules removably but rigidly to form one rigid structure; at least two leg structures having at least one of said box modules; stacking means for stacking said box modules one on another to form each of said leg structures; and placing means for placing said top-plate structure removably in position on said two leg structures.

## BRIEF DESCRIPTION OF THE DRAWINGS

Fig. 1 is a front elevation showing a desk structure of variable heights and shapes according to a second embodiment of the present invention.

In Fig. 2 showing two hollow, box modules to be used as a top-plate structure of variable shapes according to a first embodiment of the present invention:

Fig. 2(A) is a perspective view showing the two box modules to be connected into a rigid top-plate structure;

Fig. 2(B) is similar to Fig. 2(A) but shows the rigid top-plate structure; and

Fig. 2(C) is a front elevation showing the rigid top-plate structure having its box modules equipped with drawers.

Fig. 3 is a schematic diagram showing the state in which a vertical load is applied to the center of the rigid top-plate structure constructed of the two box modules in case the top-plate structure is borne at its two side ends.

In Fig. 4 showing one example of rigidly connecting means to be used for constructing the top-plate structure:

Fig. 4(A) is an exploded perspective view showing the fixing member of the rigidly connecting means, i.e., the arrangement of holes formed in a head plate of one box module for fitting a casing of the fixing member in a casing hole and for inserting a bolt of the fixing member into a bolt hole;

Fig. 4(B) is a partially cut-away, exploded perspective view showing the casing and bolt of the fixing member;

Figs. 4(C) and 4(D) are sections showing the process for tightening the casing and bolt of the fixing member;

Fig. 4(E) is a top plan view showing the bolt; and

Fig. 4(F) is similar to Fig. 4(E) but shows a supplementary member of the rigidly connecting means.

In Fig. 5 showing a specific example for mounting the rigidly connecting means in a basic module of the top-plate structure:

Fig. 5(A) is a front elevation;

Fig. 5(B) is a partially cut-away top plan view;

Fig. 5(C) is a section showing an essential portion in a rigidly connected state; and

Fig. 5(D) is a section showing the supplementary member in use.

In Fig. 6 showing an example in which three basic modules are connected widthwise by the rigidly connecting means:

Fig. 6(A) is a front elevation; and

Fig. 6(B) is a top plan view.

In Fig. 7 showing a furniture leg structure which is constructed by stacking three box modules:

Fig. 7(A) is a front elevation; and

Fig. 7(B) is a partially enlarged section showing the stacking means.

In Fig. 8 showing specific examples for mounting the rigidly connecting means in half modules to be used with the basic modules:

Figs. 8(A), 8(B) and 8(C) are front and side elevations and a top plan view, respectively, and show a longitudinal half module; and

Figs. 8(D), 8(E) and 8(F) are front and side elevations and a top plan view, respectively, and show a transverse half module.

In Fig. 9 showing examples of the basic or half modules having different heights;

Fig. 9(A) is a front elevation showing the module having a height of 5 cm;

Fig. 9(B) is similar to Fig. 9(A) but shows the module having a height of 10 cm; and

Fig. 9(C) is similar to Fig. 9(A) but shows the module having a height of 30 cm.

In Fig. 10 showing examples showing desks having their heights and extents varied:

Fig. 10(A) is a front elevation showing a Japanese-style desk for adults;

Fig. 10(B) is similar to Fig. 10(A) but shows a Japanese-style desk for three- or four-aged children;

Fig. 10(C) is similar to Fig. 10(A) but shows another Japanese-style desk with a seat for adults;

Fig. 10(D) is similar to Fig. 10(A) but shows still another Japanese-style desk with a seat for adults;

Fig. 10(E) is similar to Fig. 10(A) but shows a desk for six-aged children;

Fig. 10(F) is similar to Fig. 10(A) but shows a desk for eight-aged children;

Fig. 10(G) is similar to Fig. 10(A) but shows a desk for ten-aged children;

Fig. 10(H) is similar to Fig. 10(A) but shows a desk for twelve-aged children;

Fig. 10(I) is similar to Fig. 10(A) but shows a desk for fourteen-aged children; and

Fig. 10(J) is similar to Fig. 10(A) but shows a desk for adults.

Figs. 11(A) and 11(B) are front elevations showing examples of desks equipped with shelves of the half modules.

Figs. 12(A) and 12(B) are a front elevation and a top plan view showing another example of the arrangement of the holes of the stacking (or placing) means.

Figs. 13(A), 13(B), 13(C) and 13(D) are top plan views showing examples of the top-plate structure, which are constructed by connecting a plurality of basic modules in widthwise and/or depthwise directions by the rigidly connecting means of Fig. 6.

Figs. 14(A), 14(B) and 14(C) are top plan views showing examples of the top-plate structure, which are constructed by connecting a plurality of basic modules and half modules in widthwise and/or depthwise directions by the rigidly connecting means.

Figs. 15(A) and 15(B) are front elevations showing caps for plugging both the holes for the casings of the rigidly connecting means and the holes of the stacking (or placing) means.

DESCRIPTION OF THE PREFERRED EMBODIMENTS

The present invention will be described in the following in connection with their embodiments with reference to the accompanying drawings.

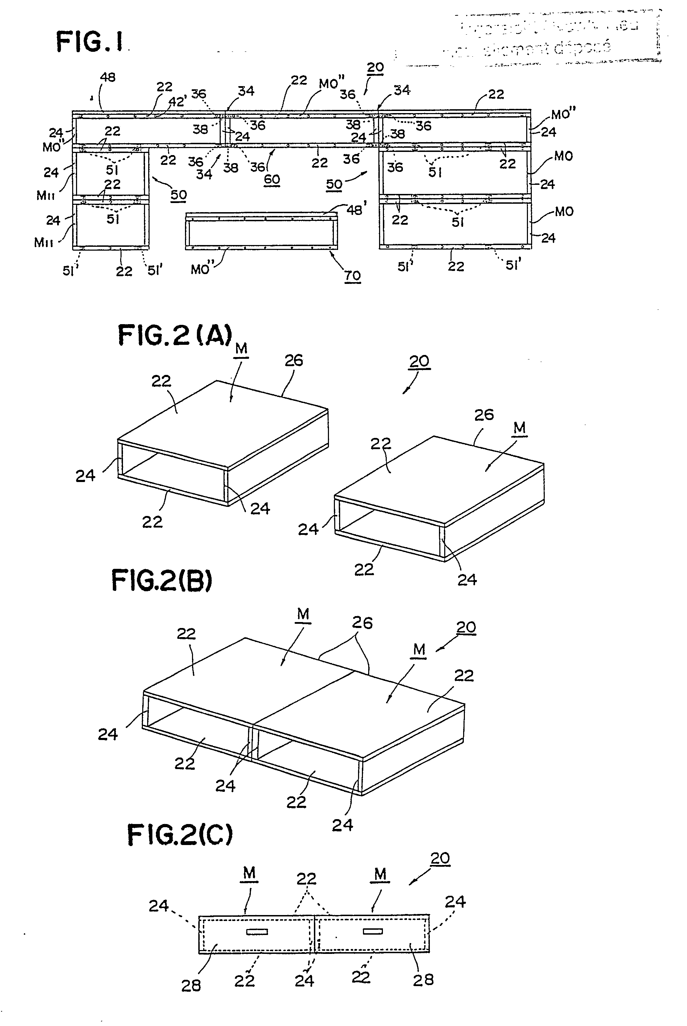

Referring first to Figs. 2(A) and 2(B), a top-plate structure, as generally designated at reference numeral 20, is constructed by connecting at least two box modules M rigidly. Each of the box modules M is a hollow box, as named so, and is composed of square head and bottom plates 22 and two side plates 24, as shown. In this structure 20, a back plate 26 may be disposed at the back, but at least the front is opened. The structure 20 is assembled by holding the outer faces of the mating side plates 24 of the box modules M in abutment and by connecting them removably but rigidly in a horizontal direction. If desired, as shown in Fig. 2-(C), a drawer 28 can be inserted into the open front of each of the box modules M. Here, this box module M may be sized to have a width and a depth of 45 cm and a height of 15 cm.

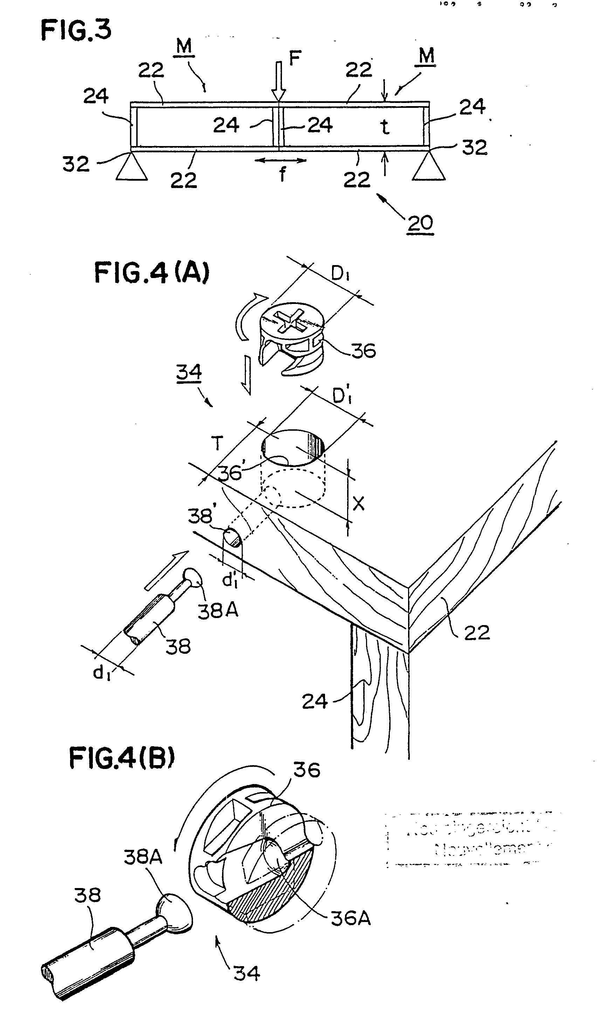

Fig. 3 is a schematic front elevation illustrating the principle of the top-plate structure 20 according to the present invention. Let the state be considered, in which a downward load (or bending moment) F is applied to the abutting side faces of the side plates 24 in case the top-plate structure 20 of Fig. 2 is borne at its two side portions 32. This state presents an extremely simplified model in which an adult user rests with his elbows on the top-plate structure 20 or in which a child user rides on the structure 20. Under the load F, a force f acts at the lower connections in the horizontal directions, i.e., in the direction to release the connections. Hence, the "rigid structure" as termed in the present invention is required to have a rigidity capable of overcoming the force f sufficiently to maintain the connections in the horizontal directions.

In order to satisfy this requirement, the following are the essential conditions:

(1) The box module M per se has the "predetermined rigidities" in the vertical and horizontal directions;

(2) The thickness (or height) t of the box module M has a predetermined considerable value; and

(3) The mating box modules M are tightened toge ther to overcome the force f which might otherwise be caused to release the connections by the load F.

If the last condition (3) is satisfied, the frictional engagement between the two box modules M is caused over a wide side area of the side plates 24 by the condition (2) so that the box modules M can be held in the rigidly connected state, because the surfaces of the side plates 24 can be easily roughed. If the tightening force is released, the

4

frictional engagement between the side plates 24 will instantly disappear. In order to prevent this disappearance, there is required another condition (4), under which the connected box modules M are supplementarily supported.

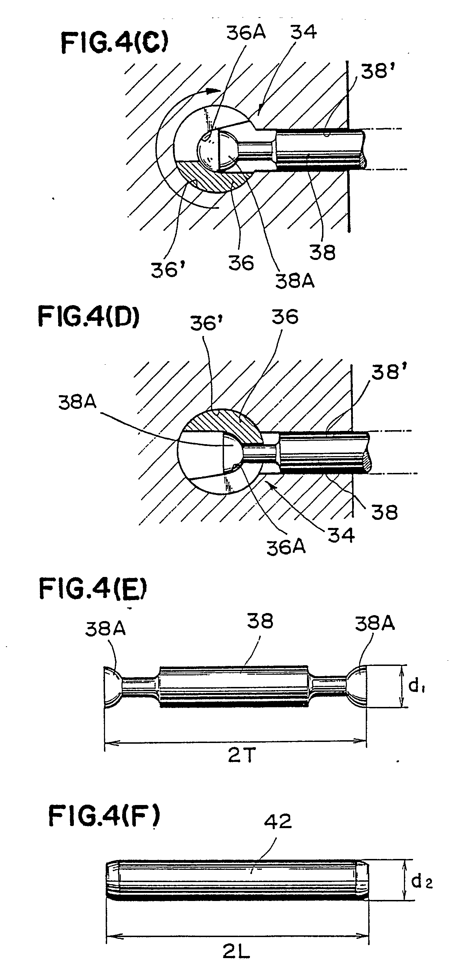

Of the above-specified conditions, the conditions (1) and (2) can be met by the structure of the box module M. Reverting to Fig. 2(A), specifically, it is sufficient to strengthen the head and bottom plates 22 and 24 and the side plates 24 sufficiently and to fix them sufficiently. The sufficient strength of the plates 22 and 24 can be ensured by selecting proper thickness or thicknesses depending upon the material. If the box module M is reinforced by the back plate 26, the thickness or thicknesses required of the plates 22 and 24 can be reduced while preventing the deformation of the module M. Moreover, the rigidly connecting means for satisfying the conditions (3) and (4) will be exemplified in the following with reference to Fig. 4.

Figs. 4(A) to 4(E) show a fixing member 34 of the rigidly connecting means. The fixing member 34 may be an ordinary tightening member such as a toggle but may be the connector which is known under the trade name of "Minifix" of HAFELE of West Germany, as will be specified in the following, partly because of its decorativeness having no projection outside of the box module M in the connected state and partly because of its workability that the fixing member 34 can be easily tightened. As shown, this fixing member 34 is composed of a casing 36, a bolt 38, and holes $36'$ and $38'$ formed in each of either the head and bottom plates 22, as shown, or the side plates 24 for fitting the casing 36 and the bolt 38, respectively. The casing 36 has a hemispherically concave face 36A having its radius decreasing in a predetermined direction, and the bolt 37 has hemispherical heads 38A at its two ends so that the engaging area of the two can be made larger than that of the disk connector of the prior art to establish a stabler engagement. Moreover, a stronger fixing force is generated when the bolt 38 is tightened by turning the casing 36 in the predetermined direction. At the same time, the bolt 38 is positioned, even if it is dislocated in the axial direction of the casing 36, so that a misalignment, if any, can be corrected.

As a matter of fact, as in the example of a basic module M0 having a size of 45 cm x 45 cm x 15 cm shown in Fig. 5, the outer faces of the head and bottom plates 22 to be connected (i.e., the upper face of the head plate 22 and the lower face of the bottom plate in the example of Fig. 4) are formed in advance with the holes $36'$ having a diameter $D_1'$ slightly larger than the diameter $D_1$ - (i.e., $D_1' > D_1$) of the casing 36. As best seen from Fig. 4(A), the holes $36'$ are bored to have their centers positioned at a distance T from the side edges of the head or bottom plate 22 and to extend vertically a depth X. The corresponding sides of the head or bottom plate 22 are formed with the holes $38'$ having a diameter $d_1'$ slightly larger than the diameter $d_1$ (i.e., $d_1' > d_1$) of the bolt 38. The holes $38'$ are bored to extend horizontally to the holes $36'$. As a result, the bolt 38 to be fitted in the facing holes $38'$ of the mating head or bottom plates 22 has a length of 2T. In the example of Fig. 5, the fixing members 34 may be provided in totally eight sets at the four sides of each head or bottom plate 22 or in totally six sets at the three sides (although not shown).

In case the side faces of the side plates 24 to be connected are made so smooth as to have an insufficient friction due to their material and finishing, it is preferable to adhere a thin plate $24'$ of elastic resins, rubber or cork capable of giving a sufficient friction for the frictional engagement to each of those side faces. If this thin plate $24'$ has its edges and corners chamfered to a suitable extent, the user of the top-plate structure 20 can be prevented from injuries. In order to satisfy the foregoing condition (4), moreover, it is also preferable to form holes $42'$ in the side face of the side plate 24 (i.e., the side face of the head or bottom plate 22 in the example of Fig. 5) at a suitable pitch. The holes $42'$ have a diameter $d_2'$ slightly larger than the diameter $d_2$ ($d_2' > d_2$) of a pin or supplementary member 42 of Fig. 4(F).

When the box modules M are to be connected, the casings 36 are fitted in the holes $36'$ which are located in the vicinity of the sides of the head and bottom plates 22 of the modules M to be connected, as shown in Fig. 4. Then, the bolts 38 and the pins 42, if desired, are inserted into the corresponding holes $38'$ and $42'$ of one of the box modules M. Next, the other box module M is brought to face the one module M at their side faces and to have its holes $38'$ and $42'$ receiving the bolts 38 and the pins 42 until the two modules M have their side faces in abutment against each other. Next, the casings 36 are turned one by one by means of a screw driver or allen wrench in the direction of arrow, as shown in Fig. 4(C), so that the corresponding bolt 38 has its hemispherical head 38A positioned and tightened by the hemispherically concave face 36A of the casing 36. If this positioning and tightening operation is finished for all the casings 36 necessary, the two box modules M are rigidly connected to each other at their side faces in the horizontal direction. If this connecting operation is accomplished for a desired number of box modules M, these modules M are rigidly connected to construct the top-plate structure 20 having a desired shape and extent. Thus, the top-plate structure 20 shown in Fig. 2(B) can be simply assembled in the state shown in Figs. 5(C) and 5(D). This structure 20 can be easily disconnected or disassembled by the reverse procedure, and these assembly and disassembly can be repeated may times.

Figs. 6(A) and 6(B) shows the top-plate structure 20 which is constructed by connecting the three basic modules M0 in the widthwise direction by the rigidly connecting means of Fig. 5. As shown, the basic modules M0 are fixed at their two side faces by the fixing members 34 and reinforced at their two corners and centers by the supplementary members 42. The top-plate structure 20 thus constructed has a width of 135 cm and a depth of 45 cm.

On the other hand, the box module M, e.g., the basic module M0 shown in Figs. 5 and 6 has its head and bottom plates 22 formed with holes 51' for fitting pins 51 acting as stacking means. The holes 51' are so paired that each pair is arranged on a common circle 52 and in a position corresponding to each side of the basic module M0, and are bored to extend a predetermined depth normal to the head and bottom plates 22. The pins 51 may preferably be made of rubber, a synthetic resin or a metal and are snugly fitted in the holes 51' of the lower basic module M0. Then, another upper basic module M0 is stacked on the lower one. A leg structure 50 is constructed by stacking three modules M0 sequentially, as shown in Figs. 7(A) and 7(B).

If the head and bottom plates 22 have a thickness of $T_1$, as seen from Fig. 7(B), the holes 51' may preferably have a depth of $T_1'$, e.g., a 1/2 to 2/3 of $T_1$ and a diameter $D_2'$, and the pins 51 may preferably have a length slightly smaller than $2T_1$ and a diameter $D_2$ slightly smaller than $D_2'$. Although not shown, the pins 51 may preferably have their heads rounded for their easy locations when the upper box module M is to be stacked on the lower one M.

If the top-plate structure 20 shown in Fig. 6 is placed on the two leg structures 50 shown in Fig. 7 by placing means using the snug fits between the pins 51 and the holes 51', then a desk, as designated at 60 in Fig. 1, can be constructed. In Fig. 1, the lefthand leg structure 50 is composed of longitudinal half modules M11, as will be described in the following with reference to Fig. 8.

Figs. 8(A), 8(B) and 8(C) show the longitudinal half module M11, and Figs. 8(D), 8(E) and 8(F) show a transverse half module M12. Although simplified illustrated, the fixing members 34, holes 36' and 38' of the rigidly connecting means and the pins 42 and holes 42' of the supplementary means are arranged like those shown in Fig. 5. The holes 51' of the stacking means and the placing means are arranged in the head and bottom plates 22 in two circles 52A and 52B at the sides. However, the holes 51' may also be arranged at the four corners of the plates 22, if preferred. Since the basic modules M0 have the size of 45 cm x 45 cm x 15 cm, the longitudinal half module M11 has a size of 22.5 cm x 45 cm x 15 cm, and the transverse half module M12 has a size of 45 cm x 22.5 cm x 15 cm. These half modules M11 and M12 are used together with the basic modules M0 to construct the top-plate structure 20 and the leg structure 50.

Turning to Fig. 9, those modules M0, M11 and M12 may preferably be composed of a plurality of kinds having different heights. For example, Fig. 9-(A) shows corresponding modules M0', M11' and M12' having a height of 5 cm; Fig. 9(B) shows corresponding modules M0'', M11'' and M12'' having a height of 10 cm; and Fig. 9(C) shows corresponding modules M0''', M11''' and M12''' having a height of 30 cm.

Thus, the furniture structure using the top-plate structure 20 can have it shape, extent and height varied by suitably changing the combination of the basic modules M0, M0', M0'' and M''' and the half modules M11, M11', M11'' and M11''', M12, M12', M12'' and M'''.

Specifically, Fig. 10(A) shows a desk 60A which is constructed of: the top-plate structure 20 having two basic modules M0'' and one half module M11' connected rigidly to one another; and the righthand and lefthand leg structures 50 having the half modules M11 and M11'' stacked one on the other, such that the top-plate structure 20 is placed on the leg structures 50. The desk 60A is a Japanese-style desk for adults, which has a height of 35 cm and a top area of 112.5 cm x 45 cm. Fig. 10(B) shows a desk 60B which is constructed of: the top-plate structure 20 having two basic modules M0'' connected to each other; and the righthand and lefthand leg structures 50 each having one half module M11, such that the top-plate structure 20 is placed on the leg structures 50. The desk 60B is a Japanese-style desk for three- or four-aged children, which has a height of 25 cm and a top area of 90 cm x 45 cm. Fig. 10(C) shows a desk 60C which is constructed of: the top-plate structure 20 having three basic modules M0'' connected to one another; the lefthand leg structure 50 having two half modules M11; and the righthand leg structure 50 having two basic modules M0, such that the top-plate structure 20 is placed on the two leg structures 50. Moreover, a chair 70 is constructed of one basic module M0''. The desk 60C is a Japanese-style desk for adults, which has a height of 40 cm, a top area of 90 cm x 45 cm, a chair height of 10 cm, and a height difference of 30 cm. Fig. 10(D) shows a desk 60D which is constructed of: the top-plate structure 20 having three basic modules M0'' connected to one another; the lefthand leg structure 50 having two half modules M11 and one half module M11'; and the righthand leg structure 50 having two basic modules M0 and one basic module M0', such that the top-plate structure 20 is placed on the two leg structures 50. Moreover, the chair 70 is constructed of one basic module M0". The desk 60D is a Japanese-style desk for adults, which has a height of 45 cm, a top area of 135 cm x 45 cm, a chair height of 10 cm, and a height difference of 35 cm. Fig. 10(E) shows a desk 60E which is constructed of: the top-plate structure 20 having three basic modules M0" connected to one another; the lefthand leg structure 50 having one half module M11" and one half module M11'''; and the righthand leg structure 50 having one basic module M0" and one basic module M0''', such that the top-plate structure 20 is placed on the two leg structures 50. Moreover, a chair 70A is constructed of one basic module M0 and one basic module M0". The desk 60E is a desk for six-aged children, which has a height of 50 cm, a top area of 135 cm x 45 cm, a chair height of 25 cm, and a height difference of 25 cm. Fig. 10(F) shows a desk 60F which is constructed of: the top-plate structure 20 having three basic modules M0" connected to one another; the lefthand leg structure 50 having one half module M11 and one half module M11'''; and the righthand leg structure 50 having one basic module M0 and one basic module M0''', such that the top-plate structure 20 is placed on the two leg structures 50. Moreover, a chair 70B is constructed of one basic module M0'''. The desk 60F is a desk for eight-aged children, which has a height of 55 cm, a top area of 135 cm x 45 cm, a chair height of 30 cm, and a height difference of 25 cm. Fig. 10(G) shows a desk 60G which is constructed by adding the half modules M11' to the two leg structures 50 of the desk 60F. This desk 60G is for ten-aged children and has a height of 60 cm and a height difference of 30 cm. Fig. 10(H) shows a desk 60H which is constructed of: the top-plate structure 20 having three basic modules M0 connected to one another; the lefthand leg structure 50 having one half module M11, one half module M11' and one half module M11'''; and the righthand leg structure 50 having one basic module M0, one basic module M0' and one basic module M0''', such that the top-plate structure 20 is placed on the two leg structures 50. Moreover, a chair 70C is constructed of one basic module M0''' and one basic module M0'. The desk 60H is a desk for twelve-aged children, which has a height of 65 cm, a top area of 135 cm x 45 cm, a chair height of 35 cm, and a height difference of 30 cm. Fig. 10(I) shows a desk 60I which is constructed by replacing the half module M11' and the basic module M0' of the leg structures 50 of the desk 60H by the half module M11" and the basic module M0", respectively. This desk 60I is for fourteen-aged children and has a height of 70 cm and a height difference of 35 cm. Fig. 10(J) shows a desk 60J which is constructed by replacing the half module M11' and the basic module M0" of the leg structures 50 of the desk 60H by the half module M11 and the basic module M0, respectively. Moreover, a chair 70D is constructed by replacing the basic module M0' of the chair 70C by the basic module M0". This desk 60J is for adults and has a height of 75 cm, a chair height of 40 cm and a height difference of 35 cm.

As shown in Fig. 10(J), moreover, the chair 70 and 70A to 70D may preferably be equipped at its bottom with a plurality of such rollers 80 through the holes 51' of the stacking means as are directed to roll back and forth. If these rollers 80 are made detachable and set to have a height of 3 cm, for example, the height of the chair 70 and 70A to 70D and accordingly the height difference from the height of the top-plate structure 20 can be changed by the height of 3 cm.

As shown in Fig. 11(A), on the other hand, shelves 90 can be mounted on the top-plate structure 20. The shelves 90 are constructed by stacking two transverse half modules M12 on the lefthand top of the top-plate structure 20 composed of three basic modules M0, by stacking two transverse half modules M12 on the righthand top, and by connecting one transverse half module M12' rigidly between the left and right transverse half modules M12 at their middles. As shown in Fig. 11-(B), moreover otehr shelves 90' can likewise be constructed by stacking three transverse half modules M12" on the lefthand top of the top-plate structure 20 composed of three basic modules M0", by stacking two transverse half modules M12 on the righthand top, and by connecting one transverse half module M12' rigidly between the upper edges of the left half module M12" and the right transverse module M12. Thus, shelves of variable shapes, extents and heights can be mounted on a portion of the top of the top-plate structure 20 by combining the basic modules M0, M0', M0" and M0''' and the transverse half modules M12, M12', M12" and M12''' selectively.

On the other hand, the arrangement of the holes 51' of the stacking (or placing) means can be freely selected. As shown in Fig. 12, for example, the four holes 51' can be formed in the four corners of the head and bottom plates 22 of the basic modules M0, M0', M0" and M0'''. Alternatively, the holes 51' may preferably be omitted, although not shown, and then the holes 36' other than those at the side used for the rigid connection can apparently be used in place of the holes 51' of the stacking means. Moreover, the holes 36' of the rigidly connecting means are bored, as shown, in the outer faces of the head and bottom plates 22 but can be bored, if desired, in the inner faces of the same. Then, the holes left as they are in the outer faces are limited to the holes 51'.

The top-plate structures 20 and the leg structures 50 thus constructed can be exemplified in various shapes and extents, as seen from top plan views in Fig. 13. In Fig. 13, the leg structures 50 are indicated single-dotted lines so that they may be easily discriminated, and the holes 51' are designated at blank circles whereas the pins 51 are designated at solid circles. As shown in Fig. 13(A), two basic modules M0 are rigidly connected longitudinally and transversely to construct the top-plate structure 20, which is placed on the leg structures 50 composed of the half modules M11. As shown in Fig. 13(B), moreover, four basic modules M0 are rigidly connected in alternately longitudinal and transverse directions to construct the top-plate structure 20 of 90 cm x 90 cm, which is placed at its four corners on four leg structures composed of quarter modules M13 of 22.5 cm x 22.5 cm. If six basic modules M0 are rigidly connected longitudinally and transversely, as shown in Fig. 13(C), it is possible to construct a dining or working table of 135 cm x 90 cm with drawers. If, moreover, four basic modules M0 are rigidly connected to construct two L-shaped top-plate structures $20_1$ and $20_2$, as shown in Fig. 13(D), then these structures $20_1$ and $20_2$ can be used independently in an office desk or corner table with a side desk or in a meeting table. The leg structures 50 may be arbitrarily combined and positioned, as shown.

If, on the other hand, the half modules M11 and M12 of Fig. 9 are used together with the basic modules M0 to construct the top-plate structure 20, this structure 20 can have a variety of shapes and extents, as apparently seen from Fig. 14.

Of the four or more casing holes 36' used to construct the top-plate structure 20, two or more holes 36' disadvantageously leave recesses in the surface of the head plate 22. However, these recesses raise no serious problem if the casings 36 are fitted and turned in the holes 36' and are covered with caps 44 having a substantially equal diameter $D_1$, as shown in Fig. 15(A). Moreover, the holes 36' left as the recesses can be buried by caps 46 also having a substantially equal diameter $D_1$, as shown in Fig. 15(B), to form a generally flat surface on the head plate 22. The stacking holes 51' can also be buried by the caps 46. Those caps 44 and 46 may preferably be made of a synthetic resin or wood.

On the other hand, the stacking holes 51' and/or the casing holes 36' can be positively used for anchoring a desk or table mat 48 having legs sized and arranged to be fitted in the holes 51'

and/or 36', as shown in Fig. 1. A seat mat 48' similar to the mat 48 can likewise be used on the seat 70.

As shown in Fig. 10(I), on the other hand, the box module M may be equipped, if desired, with a door 28' at its open front by means of hinges 49.

If the top-plate or furniture structure is to be stored when unused, it is disconnected or disassembled to the original box modules M. Then, these box modules M can be stacked and used as a chest of drawers.

The top-plate or furniture structure according to the present invention should not be limited to the embodiments thus far described but can be modified in various manners. For example, the size of the basic modules should not be limited to 45 cm x 45 cm x 15 cm but may be extended to a suitable combination such as 48 cm x 48 cm x 12 cm or 48 cm x 48 cm x 16 cm. In this latter series, the modules may have other heights of 8 cm, 24 cm, 32 cm, 36 cm and 48 cm.

Moreover, the box modules may be made of a wooden material such as laminated lumber or plywood, various molded synthetic resins, a paper material such as hardened corrugated cardboard, a light metal such as aluminum, or their hybrid material.

Moreover, the fixing members of the rigidly connecting means should not be limited to the "Minifix" but can be exemplified by other connectors such as toggles or anchor bolts. In short, the fixing members are sufficient if they can hold the abutting side faces of the modules in frictional engagement with each other to connect them rigidly.

As has been described hereinbefore, according to the present invention, it is possible to provide a furniture top-plate structure of variable shapes and extents and a desk or table structure of variable heights using the top-plate structure. These variations can be realized as the unit of the width and depth of the box modules by connecting a desired number of box modules removably but rigidly to form a rigid top-plate structure, by stacking a desired number of box modules to form leg structures, and by placing the top plate structure on the leg structures. It should be appreciated that all the box modules are made so interchangeable that they can be used commonly as the components of the top-plate structure and the leg structures. If, moreover, a suitable unit is selected, the top-plate structure and the furniture structure can be easily assembled and disassembled even by women and children, because the rigidly connecting means are easily handled by them.

Some device is needed for the assembly and disassembly and is interesting for children because it is common to the feeling of the "building blocks".

If the top-plate structure and/or the leg structures are not used as they are, they can be partially or wholly disassembled and stacked so that they can be transformed into a chest of drawers, thus forming no dead space.

Moreover, the box modules disassembled can be easily delivered in and out and transported when they are to be purchased or brought for the house-moving. In addition, the box modules are so simply constructed that they can be easily knocked down. Then, the modules can be more easily handled for transportations to eliminate the waste space for "transporting the air".

Thus, the top-plate and furniture structures according to the present invention not only proposes a new life-style for the users but also brings about a revolution in the manufacture and transportation in the furniture.

## Claims

1. A top-plate structure of variable shapes and extents for furniture, comprising:
a plurality of hollow, box modules having predetermined rigidities in vertical and horizontal directions; and
rigidly connecting means for holding the side faces of said box modules in abutment against each other and connecting said box modules removably but rigidly to form one rigid structure.

2. A top-plate structure according to Claim 1, wherein said rigidly connecting means includes a plurality of fixing members for fixing the abutting side faces of said box modules on each other by holding, when tightened, said side faces in frictional engagement with each other.

3. A top-plate structure according to Claim 2, wherein each of said fixing members has: a casing hole formed in a face of said box module perpendicular to the side face of the same; a casing adapted to be fitted removably and rotatably in said casing hole and having a hemispherically concave face having its radius decreasing in a predetermined direction; a bolt hole formed normal in said side face to extend to said casing hole; and a bolt having at its two ends hemispherical heads each of which is adapted to come into removable engagement with the concave face of the casing fitted in said casing hole, when said casings are turned to tighten the hemispherical head of said bolt after said bolt has been inserted through the bolt hole in said side faces into said casings, so that said box modules may be fixed through said bolt.

4. A top-plate structure according to Claim 2, further comprising supplementary means for supplementing the fixture of said box modules and reinforcing the side faces abutting to prevent their misalignment.

5. A top-plate structure according to Claim 4, where in said supplementary means includes: a plurality of holes formed normal in the side faces of said box modules; and a plurality of pins fitted removably but snugly in said holes, respectively.

6. A top-plate structure according to Claim 1, wherein each of said box modules includes: a head plate; a bottom plate; and two side plates connected to said head plate and said bottom plate to form a box shape.

7. A top-plate structure according to Claim 6, further comprising a drawer sized to be inserted into at least one of said box modules.

8. A top-plate structure according to Claim 6, wherein each of said box modules further includes a back plate disposed at the back thereof and fixed in said head plate, said bottom plate and said side plates.

9. A top-plate structure according to Claim 6, wherein said box modules are composed of basic modules having a generally square top plan view.

10. A top-plate structure according to Claim 9, wherein said box modules are further composed of half modules having a half width or depth as large as that of said basic modules.

11. A furniture structure of variable shapes and heights, comprising:
a top-plate structure of variable shapes, including: a plurality of hollow, box modules having predetermined rigidities in vertical and horizontal directions; and rigidly connecting means for holding the side faces of said box modules in abutment against each other and connecting said box modules removably but rigidly to form one rigid structure;
at least two leg structures having at least one of said box modules;
stacking means for stacking said box modules one on another to form each of said leg structures; and placing means for placing said top-plate structure removably in position on said two leg structures.

12. A furniture structure according to Claim 11, wherein said stacking means includes: a plurality of vertical holes formed in predetermined positions in the top and bottom outer faces of said box modules; and a plurality of pins sized and shaped to be fitted snugly but removably in the vertical holes which are formed in the faces of said box modules to be stacked one on the other.

13. A furniture structure according to Claim 11, wherein said placing means includes: a plurality of vertical holes formed in predetermined positions in the top and bottom outer faces of said box modules; and a plurality of pins sized and shaped to be fitted snugly but removably in the vertical holes which are formed in the faces of said box modules to be stacked one on the other.

14. A furniture structure according to Claim 11, wherein said box modules are composed of: basic modules having a generally square top plan view; and half modules having a half width or depth as large as that of said basic modules.

15. A furniture structure according to Claim 14, wherein said basic modules and said half modules have heights a positive integer times as large as a basic height.

# FIG.1

# FIG.2(A)

# FIG.2(B)

# FIG.2(C)

**FIG.3**

**FIG.4 (A)**

**FIG.4(B)**

## FIG.4(C)

36A  34
38'
36'  36  38A  38

## FIG.4(D)

36'  36
38'
38A
38
36A  34

## FIG.4(E)

38A  38  38A

$d_1$

$2T$

## FIG.4(F)

42

$d_2$

$2L$